# FASCICULE DE BREVET EUROPEEN

(11) **EP 2 474 716 B1**
(45) Date de publication et mention de la délivrance du brevet: **21.06.2017**
(21) Numéro de dépôt: 11192036.9
(22) Date de dépôt: 06.12.2011
(51) Int. Cl.: F01N 3/035, F01N 3/08

(54) **Filtre à particules**
Partikelfilter
Particle filter

(30) Priorité: 11.01.2011 FR 1150210
(43) Date de publication de la demande: 11.07.2012
(73) Titulaire: Peugeot Citroen Automobiles S.A., 78140 Vélizy Villacoublay (FR)
(72) Inventeur: Crehan, Gabriel, 92420 Vaucresson (FR)

(56) Documents cités:
- WO-A1-2005/014146
- WO-A2-2010/004320
- DE-A1-102005 005 663
- DE-A1-102008 055 890
- US-A1- 2010 242 438
- US-B1- 7 062 904

## Description

L'invention concerne un filtre à particules pour une ligne d'échappement d'un moteur diesel.

On connaît un filtre à particules pour une ligne d'échappement d'un moteur diesel, du type comportant des canaux délimités par des parois poreuses qui sont imprégnées, d'une part, d'un premier revêtement catalytique pour l'oxydation des imbrûlés issus du moteur, et, d'autre part, en amont du premier revêtement dans le sens du déplacement des gaz d'échappement, d'un second revêtement catalytique pour la réduction des oxydes d'azote issus du moteur.

Le problème d'un tel filtre à particules est le fait que, tant que ce dernier n'atteint pas une température minimale (typiquement, environ 150°C), la réduction catalytique des oxydes d'azote est très faible alors que la production de ces oxydes est particulièrement importante. Il est par ailleurs connu du document WO 2005/014146 un dispositif catalytique utilisant un catalyseur réducteur vis-à-vis des NOx et un piège à NOx.

L'invention vise à résoudre cet inconvénient et à augmenter la réduction des oxydes d'azote grâce au filtre à particule selon la revendication 1.

Selon l'invention, dans le filtre à particules du type précité, au moins le premier revêtement contient un matériau adsorbant adapté à adsorber les oxydes d'azote à basse température et à les désorber à haute température.

Ainsi, en utilisant des matériaux adsorbants dont la température à partir de laquelle se produit la désorption correspond sensiblement ou est supérieure à celle à partir de laquelle les oxydes d'azote sont catalytiquement réduits, les oxydes émis à basse température (essentiellement, au démarrage du moteur) sont piégés par les matériaux absorbant puis, quand la température de désorption est atteinte, sont libérés et réduits par les catalyseurs environnant.

D'autres caractéristiques et avantages de l'invention ressortiront clairement de la description qui en est faite ci-après, à titre indicatif et nullement limitatif, en référence aux dessins annexés, dans lesquels :

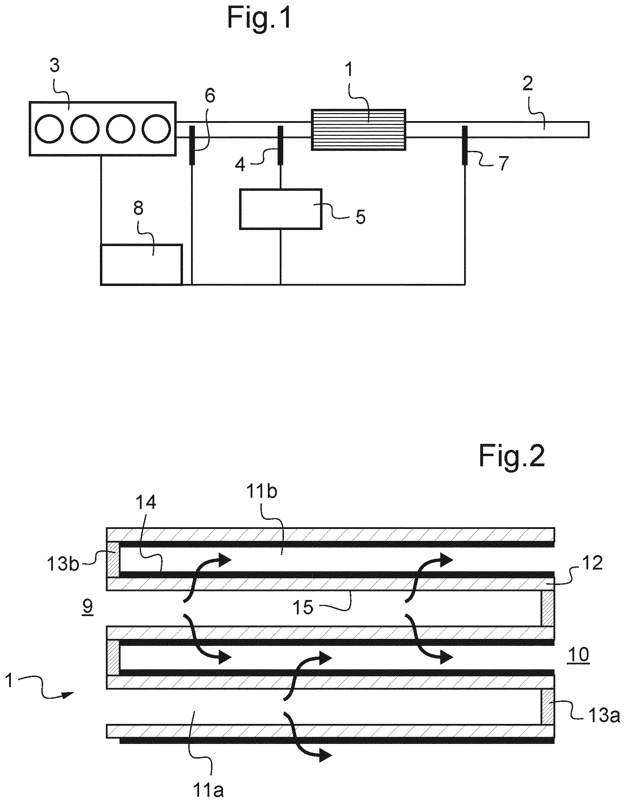

- la figure 1 illustre schématiquement la disposition d'un filtre à particules dans une ligne d'échappement ; et
- la figure 2 illustre schématiquement la structure interne d'un filtre à particules conforme à la présente invention.

De façon classique, un filtre à particules 1 est disposé dans une ligne d'échappement 2 d'un moteur diesel 3. A ce filtre à particules 1 est associé un injecteur de réducteur 4 qui débouche dans la ligne d'échappement 2 en amont du filtre 1, et qui est alimenté en réducteur par un réservoir 5. Le réducteur peut être par exemple de l'ammoniaque, de l'urée ou alors un hydrocarbure (le carburant). De plus, dans le présent exemple, deux détecteurs d'oxydes d'azote 6, 7 sont disposés dans la ligne d'échappement, l'un 6 en amont du filtre à particules 1 (et ici, en amont de l'injecteur de réducteur 4), l'autre 7 en aval du filtre à particules 1. Un système de contrôle 8 est relié au moteur 3, à l'injecteur de réducteur 4 et aux deux détecteurs d'oxydes d'azote 6, 7 afin d'optimiser la quantité de réducteur à introduire dans la ligne d'échappement.

Le filtre à particules 1 comporte une extrémité amont 9 et une extrémité aval 10 et est traversé par les gaz d'échappement de l'extrémité amont 9 à l'extrémité aval 10. Le filtre 1 comporte des canaux 11 a, 11 b qui s'étendent longitudinalement de l'amont vers l'aval et qui sont délimités par des parois poreuses 12. Ces canaux 11 a, 11 b sont obturés soit au niveau de leur extrémité aval 13a, soit au niveau de leur extrémité amont 13b, afin d'obliger les gaz d'échappement de traverser les parois poreuses 12.

De façon classique, le matériau poreux formant les parois poreuses peut comprendre au moins un composé céramique et/ou au moins un composé métallique. Parmi les composés céramiques, peuvent être utilisés (seul ou en combinaison) la cordierite (Al₃Mg₂AlSi₅O₁₈), le carbure de silicium (SiC), le carbure de bore (B₄C), le nitrure de silicium (Si₃N₄), le nitrure de bore (BN), le nitrure d'aluminium (AIN), l'alumine (Al₂O₃), le zircone (ZrO₂), la mullite (Al₆Si₂O₁₃), le titanate d'aluminium (Al₂TiO₅), le borure de zirconium (ZrB₂) et un sialon. Parmi les composés métalliques, peuvent être utilisés (seul ou en combinaison) le fer et le magnésium. De plus, afin de réaliser les parois, des éléments liants peuvent être utilisés pour relier entre eux les matériaux poreux. Ces éléments liants peuvent comprendre au moins un des éléments suivants : la cordierite (Al₃Mg₂AlSi₅O₁₈), le carbure de silicium (SiC), le carbure de bore (B₄C), le nitrure de silicium (Si₃N₄), le nitrure de bore (BN), le nitrure d'aluminium (AIN), l'alumine (Al₂O₃), le zircone (ZrO₂), la mullite (Al₆Si₂O₁₃), le titanate d'aluminium (Al₂TiO₅), le borure de zirconium (ZrB₂) et un sialon

Les parois poreuses 12 sont imprégnées, d'une part, d'un premier revêtement catalytique 14 permettant l'oxydation catalytique des imbrûlés, et, d'autre part, en amont du premier revêtement 14, d'un second revêtement catalytique 15 permettant la réduction des oxydes d'azote. Cette imprégnation peut être faite à la surface des parois ou dans celles-ci. Ici, la surface amont des parois poreuses 12 est imprégnée par le second revêtement 15, et la surface aval par le premier revêtement 14.

Le premier revêtement catalytique 14 comprend des premiers catalyseurs utilisés pour l'oxydation des imbrûlés issus de la combustion du carburant dans le moteur diesel 3. Usuellement, le premier revêtement catalytique 14 comprend au moins un des composés suivants : l'alumine (Al₂O₃), le dioxyde de titane (TiO₂), l'oxyde de zirconium (ZrO₂), l'oxyde de cérium IV (CeO₂), l'oxyde d'yttrium (Y₂O₃), et supporte au moins un premier catalyseur parmi un métal précieux (tel que le platine (Pt), le palladium (Pd), le rhodium (Rh), le ruthénium (Ru), le rhénium (Re), l'or (Au), l'argent (Ag)) et/ou un métal de transition (tel que le scandium (Sc), le titane (Ti), le vanadium (V), le chrome (Cr), le manganèse (Mn), le fer (Fe), le cobalt (Co), le nickel (Ni), le cuivre (Cu) ou le zinc (Zn)). Le premier revêtement peut également comprendre des pièges à hydrocarbures tel que des zéolites et/ou des perovskite et/ou de l'argile.

Le second revêtement catalytique 15 comprend des seconds catalyseurs utilisés pour la réduction des oxydes d'azote en réaction avec le réducteur injecté par l'injecteur 4. Usuellement, le second revêtement catalytique 15 comprend au moins un des composés suivants : l'alumine (Al₂O₃), le dioxyde de titane (TiO₂), l'oxyde de zirconium (ZrO₂), l'oxyde de cérium IV (CeO₂), l'oxyde d'yttrium (Y₂O₃), la silice (SiO₂) et supporte au moins un premier catalyseur parmi un métal précieux (tel que le platine (Pt), le palladium (Pd), le rhodium (Rh), le ruthénium (Ru), le rhénium (Re), l'or (Au), l'argent (Ag)) et/ou un métal de transition (tel que le scandium (Sc), le titane (Ti), le vanadium (V), le chrome (Cr), le manganèse (Mn), le fer (Fe), le cobalt (Co), le nickel (Ni), le cuivre (Cu) ou le zinc (Zn)) et/ou des perovskites et/ou des zéolites dopées par des métaux.

Les réactions de réduction sont

NOₓ + NH₃ → N₂ + H₂O

NOₓ + CO → N₂ + CO₂

NOₓ + C_{y}H_{z} → N₂ + H₂O + CO₂

Selon l'invention, le premier revêtement 14 contient un matériau adsorbant adapté à adsorber les oxydes d'azote à basse température et à les désorber à haute température.

Toujours selon l'invention, des matériaux adsorbants sont disposés dans le second revêtement 15. Dès que la température de désorbtion est atteinte (par exemple 150 °C), les oxydes d'azote sont libérés et réduits par les catalyseurs de réduction sélective environnant disposés dans ce second revêtement. Dans le présent exemple, des matériaux adsorbants sont également disposés dans le premier revêtement 14. Dès que la température de désorbtion est atteinte (par exemple 150 °C), les oxydes d'azote sont libérés et réduits par les catalyseurs de réduction sélective portés par le second revêtement après rétrodiffusion.

Les matériaux adsorbants peuvent être disposés en surface des parois poreuses 12 ou dans celles-ci. Ces matériaux peuvent être un ou plusieurs des matériaux suivants : de l'alumine (Al₂O₃), du dioxyde de titane (TiO₂), de l'oxyde de zirconium (ZrO₂), de l'oxyde de cérium IV (CeO₂), de l'oxyde d'yttrium (Y₂O₃), de la silice (SiO₂), des zéolites, des métaux alcalins, des métaux alcalino-terreux, des métaux de transition, des lanthanides, des actinides, des perovskites.

En utilisation, les gaz d'échappement comprenant, d'une part ceux issus de la combustion du carburant dans le moteur diesel 3 tels que le dioxyde de carbone, les hydrocarbures imbrûlés, les oxydes d'azote, et le monoxyde de carbone, et d'autre part, deux réducteurs introduits par l'injecteur 4, pénètrent dans le filtre à particules 1 par l'extrémité amont 9 de ce dernier (plus précisément, dans les canaux amont 11 a dont l'extrémité aval 13a est obturée). Dans le filtre 1 du fait de l'obturation de l'extrémité aval 13a des canaux amont 11a, les gaz d'échappement traversent les parois poreuses 12 délimitant ces canaux amont 11 a des canaux aval 11 b dont l'extrémité amont 13b est obturée). Lors de cette traversée, les gaz viennent d'abord en contact avec la surface amont des parois poreuses 12 imprégnée du second revêtement 15. Là, selon la température, les oxydes d'azote sont soit piégés par matériaux adsorbants (à basse température, typiquement inférieure à 150 °C), soit réduits (à haute température, typiquement supérieure à 150 °C) que ces oxydes proviennent des matériaux adsorbants ou directement du moteur 3. En fin de traversée des parois 12, les gaz viennent en contact avec la surface aval de ces dernières imprégnée du premier revêtement 14. Là, les imbrûlés sont oxydés et, selon la température, les oxydes d'azote sont soit piégés par matériaux adsorbants (à basse température, typiquement inférieure à 150 °C), soit libérés et réduits suite à une retrodiffusion. Les gaz circulent ensuite le long des canaux aval 11 b et sortent du filtre à particules 1.

La présence des matériaux adsorbants a un impact négligeable sur le volume global des premier et second revêtements 14, 15 (et donc sur la perte de pression dans le filtre à particules 1). De plus, ces matériaux adsorbants sont d'un coût réduit. Par ailleurs, les perovskites sont également des catalyseurs pour l'oxydation des imbrûlés et leur présence dans le premier revêtement 14 permet d'accroître l'activité de l'oxydation des imbrûlés à basse température (et donc permet de diminuer la quantité de métal précieux dans le premier revêtement).

## Revendications

1. Filtre à particules (1) pour une ligne d'échappement (2) d'un moteur diesel (3), le filtre comportant des canaux (11a, 11 b) délimités par des parois poreuses (12) imprégnées, d'une part, d'un premier revêtement catalytique (14) pour l'oxydation des imbrûlés, et, d'autre part, en amont du premier revêtement (14), d'un second revêtement catalytique (15) pour la réduction sélective des oxydes d'azote en présence d'un réducteur, **caractérisé en ce que** le premier revêtement (14) contient des matériaux adaptés à adsorber les oxydes d'azote à basse température et à les désorber à haute température, les oxydes émis à basse température, essentiellement au démarrage du moteur, étant piégés par les matériaux absorbants puis, quand la température de désorption est atteinte, étant libérés et réduits par le catalyseur de réduction sélective porté par le second revêtement après rétrodiffusion.

2. Filtre à particules (1) selon la revendication précédente, **caractérisé en ce que** l'imprégnation du premier et du second revêtement catalytique (14,15) se fait à la surface desdites parois, ou dans celles-ci.

3. Filtre à particules selon la revendication 1 ou 2, **caractérisé en ce que** les matériaux adsorbants sont également portés par le second revêtement (15).

4. Filtre à particules selon l'une des revendications 1 à 3, **caractérisé en ce que** les matériaux adsorbants sont disposés en surface des parois poreuses (12) ou dans l'épaisseur des parois (12).

5. Filtre à particules selon l'une des revendications 1 à 4, **caractérisé en ce que** les matériaux adsorbants comprennent au moins un des composés suivants : de l'alumine (Al₂O₃), du dioxyde de titane (TiO₂), de l'oxyde de zirconium (ZrO₂), de l'oxyde de cérium IV (CeO₂), de l'oxyde d'yttrium (Y₂O₃), de la silice (SiO₂), des zéolites, des métaux alcalins, des métaux 30 alcalino-terreux, des métaux de transition, des lanthanides, des actinides, des perovskites.

6. Filtre selon l'une des revendications précédentes, **caractérise en ce que** la température de désorbtion des matériaux absorbants est de 150°C.

## Patentansprüche

1. Partikelfilter (1) für einen Abgasstrang (2) eines Dieselmotors (3), wobei das Filter Kanäle (11a, 11b) umfasst, die von porigen Wänden (12) abgegrenzt sind, die einerseits mit einer ersten katalytischen Beschichtung (14) für die Oxidation unverbrannter Stoffe imprägniert sind, und, andererseits, stromaufwärts der ersten Beschichtung (14) mit einer zweiten katalytischen Beschichtung (15) zur selektiven Reduktion der Stickstoffoxide in Gegenwart eines Reduziermittels, **dadurch gekennzeichnet, dass** die erste Beschichtung (14) Materialien enthält, die angepasst sind, um die Stickstoffoxide bei niedriger Temperatur zu adsorbieren und sie bei hoher Temperatur zu desorbieren, wobei die bei niedriger Temperatur, im Wesentlichen beim Anlassen des Motors abgegebenen Oxide von den absorbierenden Materialien gefangen und, wenn die Desorptionstemperatur erreicht ist, freigesetzt und von dem Katalysator zur selektiven Reduktion, der von der zweiten Beschichtung getragen wird, nach Rückstreuung reduziert werden.

2. Partikelfilter (1) nach dem vorhergehenden Anspruch, **dadurch gekennzeichnet, dass** die Imprägnierung der ersten und zweiten katalytischen Beschichtung (14, 15) auf der Oberfläche der Wände oder in diesen erfolgt.

3. Partikelfilter nach Anspruch 1 oder 2, **dadurch gekennzeichnet, dass** die adsorbierenden Materialien auch von der zweiten Beschichtung (15) getragen werden.

4. Partikelfilter nach einem der Ansprüche 1 bis 3, **dadurch gekennzeichnet, dass** die adsorbierenden Materialien auf der Oberfläche der porigen Wände (12) oder in der Stärke der Wände (12) angeordnet sind.

5. Partikelfilter nach einem der Ansprüche 1 bis 4, **dadurch gekennzeichnet, dass** die adsorbierenden Materialien mindestens eine der folgenden Verbindungen umfassen: Aluminiumoxid (Al₂O₃), Titanoxid (TiO₂) Zirkonoxid (ZrO₂), Cer- (IV) oxid (CeO₂), Yttriumoxid (Y₂O₃), Siliziumdioxid (SiO₂), Zeolithe, alkalische Metalle, Erdalkalimetalle, Übergangsmetalle, Lanthanide, Actinide, Perowskite.

6. Filter nach einem der vorhergehenden Ansprüche, **dadurch gekennzeichnet, dass** die Desorptionstemperatur der absorbierenden Materialien 150 °C beträgt.

## Claims

1. A particle filter (1) for an exhaust line (2) of a diesel engine (3), the filter comprising channels (11a, 11b) delimited by porous walls (12) impregnated, on the one hand, by a first catalytic coating (14) for the oxidation of the unburnt remains, and, on the other hand, upstream of the first coating (14), by a second catalytic coating (15) for the selective reduction of the nitrogen oxides in the presence of a reducer, **characterized in that** the first coating (14) contains materials suitable for adsorbing the nitrogen oxides at low temperature and to desorb them at high temperature, the oxides emitted at low temperature, essentially at the starting of the engine, being trapped by the absorbent materials, then, when the desorption temperature is reached, being released and reduced by the selective reduction catalyst carried by the second coating after retrodiffusion.

2. The particle filter (1) according to the preceding claim, **characterized in that** the impregnation of the first and of the second catalytic coating (14, 15) is carried out on the surface of said walls, or in the latter.

3. The particle filter according to Claim 1 or 2, **characterized in that** the adsorbent materials are likewise carried by the second coating (15).

4. The particle filter according to one of Claims 1 to 3, **characterized in that** the adsorbent materials are disposed on the surface of the porous walls (12) or in the thickness of the walls (12).

5. The particle filter according to one of Claims 1 to 4, **characterized in that** the adsorbent materials include at least one of the following compounds: alumina (Al₂O₃), titanium dioxide (TiO₂), zirconium oxide (ZrO₂), cerium IV oxide (CeO₂), yttrium oxide (Y₂O₃), silica oxide (SiO₂), zeolites, alkali metals, alkaline earth metals 30, transition metals, lanthanides, actinides, perovskites.

6. The filter according to one of the preceding claims, **characterized in that** the desorption temperature of the absorbent materials is 150°C.
